# EUROPEAN PATENT APPLICATION

(11) **EP 2 750 009 A2**
(43) Date of publication of application: **02.07.2014**
(21) Application number: 13199672.0
(22) Date of filing: 27.12.2013
(51) Int. Cl.: G06F 3/044

(54) **Touch panel**

(30) Priority: 27.12.2012 TW 101150464; 08.03.2013 TW 102108358
(71) Applicant: Wintek Corporation, 42760 Taichung City (TW)
(72) Inventor: Chu, Kuan-Yu, 407 Taichung City (TW); Huang, Chun-Cheng, 630 Yunlin County (TW); Huang, Chen-Fu, 427 Taichung City (TW); Wang, Yu-Ching, 438 Taichung City (TW); Hwang, Chin-Pei, 402 Taichung City (TW); Chen, Ming-Wu, 557 Nantou County (TW); Liu, Chiu-Mei, 406 Taichung City (TW); Lin, Yan-Jun, Taichung City (TW); Liu, Chia-Hung, 406 Taichung City (TW)
(74) Representative: Becker Kurig Straus

(57) **Abstract**

A touch panel (200, 201, 202, 203, 204, 300, 400, 500, 600) includes a substrate (211), conductive series (221, 421), outer traces (231, 431, 432), and an outer device (280, 380, 480). Two ends of each of the outer traces (231, 431, 432) are respectively connected to two ends of the corresponding conductive series (221, 421). The outer traces (231, 431, 432) connected to the each of the first conductive series (221, 421) extend to a connection region (293, 393, 493) within the peripheral region (292). The outer device (280, 380, 480) is electrically connected to the outer traces (231, 431, 432). Each of the outer traces (231, 431, 432), each corresponding conductive series (221, 421), and the outer device (280, 380, 480) in the connection region (293, 393, 493) constitute a closed conductive path on the substrate (211).

## Description

### Field of the Invention

The present invention generally relates to a touch panel, and more particularly to a touch panel with a closed-loop double routing design.

### Background of the Invention

In recent times, various technologies have been developed in the field of the touch panels. Generally, the different types of touch panels include the resistance type, the capacitance type and the optical type. Concerning the capacitive touch panel, owing to its outstanding characteristics, such as high accuracy, multi-touch property, better endurance and high touch resolution, the capacitive touch panel has become a mainstream technology in the high, middle end consuming electronic products. The capacitive touch panel uses sensing electrodes to detect capacitance variations at the corresponding touch points and uses connection lines, which are electrically connected to electrodes along different directional axes, to transmit the signals so as to complete the whole touch sensing and positioning process. In conventional capacitive touch panels, the composition of the sensing electrodes generally comprises transparent materials, such as indium tin oxide (ITO). Since the resistance of transparent materials is relatively high, in order to avoid signal delay resulting from the relatively high resistance of each of the sensing electrodes, outer traces, used to transmit or receive the signals, are often disposed on two ends of each of the sensing electrodes. More particularly, since the length of the sensing electrodes increase as the size of the touch panel increases, especially in large-size touch panels, the increase in length of the sensing electrodes will intensify the signal delay effect. As a result, a double routing design is necessary for driving the touch panel.

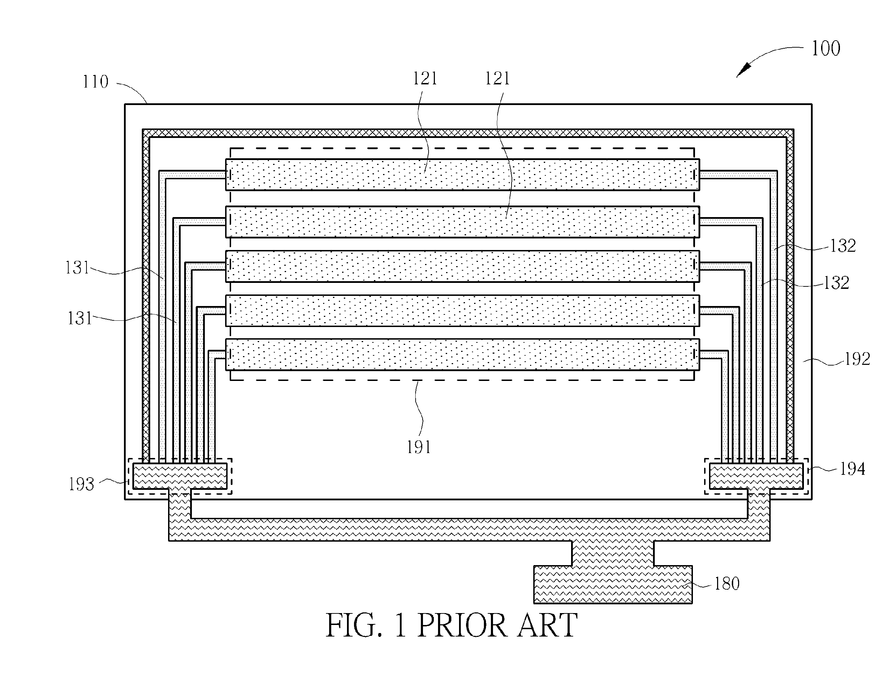

As shown in FIG. 1, in a conventional touch panel 100, a plurality of first outer traces 131 and a plurality of second outer traces 132 are disposed in a peripheral region 192 of a substrate 110. The two ends of each of the sensing electrodes 121 in the touch sensing region 191 may respectively electrically connect the corresponding first outer trace 131 to the corresponding second outer trace 132. The other end of each of the first outer traces 131, which is opposite to the end connected to the sensing electrode 121, may extend to a first connection region 193. Similarly, the other end of each of the second outer traces 132, which is opposite to the end connected to the sensing electrode 121, may extend to a second connection region 194 (this design is generally regarded as a double pin design). Since the first connection region 193 and the second connection region 194 are generally disposed on two ends of the peripheral region 192, at least two bonding processes need to be carried out respectively in the first connection region 193 and the second connection region 194 when a flexible printed circuit board (FPC) 180 is used. Additionally, apart from the relatively long aligning time in the bonding process for respectively aligning the first connection region 193 and the second connection region 194, the use amount of the materials used in the bonding processes, such as anisotropic conductive film (ACF), is increased as well. Furthermore, since the double pin design used in conventional touch panels requires relatively long FPC and the cost of the FPC is proportional to its area, the manufacturing cost in the FPC will be increased accordingly. Obviously, the drawbacks described above all negatively affect the cost for manufacturing the touch panels, and there is still a need to improve the structure of touch panels with double routing designs.

### Summary of the Invention

The present invention aims at providing a touch panel with a double routing design. In this configuration, each outer trace and each corresponding electrode can form a closed conductive path so as to simplify the process for bonding an outer device and to lower the manufacturing costs.

This is achieved by providing a touch panel with a double routing design according to claim 1. The dependent claims pertain to corresponding further developments and improvements.

As will be seen more clearly from the detailed description following below, the claimed touch panel with a double routing design includes a first substrate, a plurality of first conductive series, a plurality of outer traces, and an outer device. The first conductive series are disposed on the first substrate and extend along a first direction. The outer traces are disposed in the peripheral region. Two ends of each of the outer traces are respectively connected to two ends of the corresponding first conductive series. The outer traces connected to each of the first conductive series extend to a connection region disposed within the peripheral region. The outer device is disposed in the peripheral region and electrically connected to the outer traces. Each of the outer traces, each corresponding first conductive series, and the outer device in the connection region form a closed conductive path on the first substrate.

According to another preferred embodiment of the present invention, a touch panel having a peripheral region is provided. The touch panel includes a first substrate, a plurality of first conductive series, a plurality of first outer traces, and an outer device. The first conductive series are disposed on the first substrate and extend along a first direction. The first outer traces are disposed in the peripheral region. Two ends of each of the outer traces are respectively connected to two ends of the corresponding first conductive series. The first outer traces connected to each of the first conductive series extend to a connection region disposed within the peripheral region and include interrupted sections within the connection region. The outer device is disposed in the peripheral region and electrically connected to the outer traces. Each of the outer traces, each corresponding first conductive series, and the outer device in the connection region form a closed conductive path on the first substrate. The outer device within the connection region is electrically connected to two ends of the interrupted section of each of the first outer traces so as to constitute the closed conductive path.

According to still another preferred embodiment of the present invention, a touch panel having a peripheral region is provided. The touch panel includes a first substrate, a plurality of first conductive series, a plurality of first outer traces, a plurality of second conductive series, a plurality of second outer traces, a grounding line, and an outer device. The first conductive series are disposed on the first substrate and extend along a first direction. The first outer traces are disposed in the peripheral region. At least one end of each of the first outer traces is respectively connected to one end of the first conductive series, and the first outer traces extend to a connection region disposed within the peripheral region. The second conductive series are disposed on the first substrate and extend along a second direction. The first direction intersects the second direction. The second outer traces are disposed in the peripheral region. At least one end of each of the second outer traces is respectively connected to one end of the second conductive series, and the second outer traces extend to the connection region within the peripheral region. The grounding line is disposed in the peripheral region. The grounding line extends to the connection region within the peripheral region and comprises at least an interrupted section within the connection region. The outer device is disposed in the peripheral region. The outer device is electrically connected to the first outer traces, the second outer traces, and the grounding line, and the outer device within the connection region is electrically connected to two ends of the interrupted section of the grounding line so as to constitute the closed conductive path.

These and other objectives of the present invention will no doubt become clear to those of ordinary skill in the art after reading the following detailed description of the preferred embodiment that is illustrated in the various figures and drawings.

### Brief Description of the Drawings

The invention is further illustrated by way of example, taking reference to the accompanying drawings. Thereof
FIG. 1 is a schematic diagram showing a conventional touch panel,
FIG. 2 is a schematic diagram showing a touch panel according to a first preferred embodiment of the present invention,
FIG. 3 is a schematic cross-sectional diagram taken along a line A-A' in FIG. 2,
FIG. 4 is a schematic cross-sectional diagram taken along a line B-B' in FIG. 2,
FIG. 5 is a schematic diagram showing a touch panel according to another preferred embodiment of the present invention,
FIG. 6 is a schematic diagram showing a touch panel according to another preferred embodiment of the present invention,
FIG. 7 is a schematic top view showing a touch panel according to another preferred embodiment of the present invention,
FIG. 8 is a schematic cross-sectional diagram showing a touch panel according to another preferred embodiment of the present invention,
FIG. 9 is a schematic diagram showing a touch panel according to another preferred embodiment of the present invention,
FIG. 10 is a schematic diagram showing a touch panel according to a second preferred embodiment of the present invention,
FIG. 11 is a schematic cross-sectional diagram taken along a line C-C' in FIG. 10,
FIG. 12 is a schematic diagram showing a touch panel according to a third preferred embodiment of the present invention,
FIG. 13 is a schematic cross-sectional diagram taken along a line D-D' in FIG. 12,
FIG. 14 is a schematic cross-sectional diagram taken along a line E-E' in FIG. 12,
FIG. 15 is a schematic diagram showing a touch panel according to a fourth preferred embodiment of the present invention,
FIG. 16 is a schematic cross-sectional diagram taken along a line F-F' in FIG. 15,
FIG. 17 is a schematic diagram showing a touch panel according to a fifth preferred embodiment of the present invention, and
FIG. 18 is a schematic cross-sectional diagram taken along a line G-G' in FIG. 17.

### Detailed Description

To provide a better understanding of the present invention to the skilled users in the technology of the present invention, preferred embodiments will be detailed as follows. The preferred embodiments of the present invention are illustrated in the accompanying drawings with numbered elements to elaborate the contents and effects to be achieved.

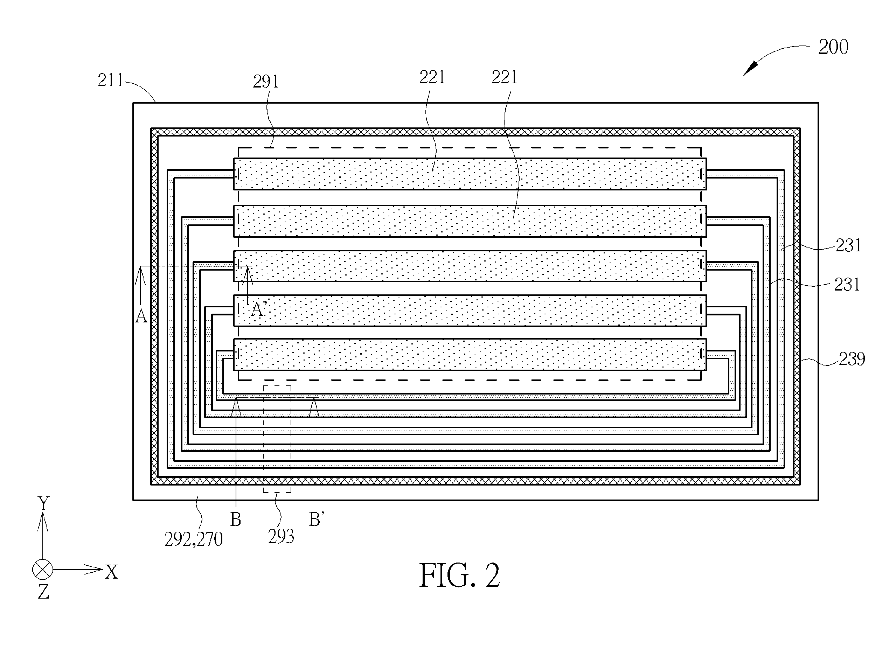

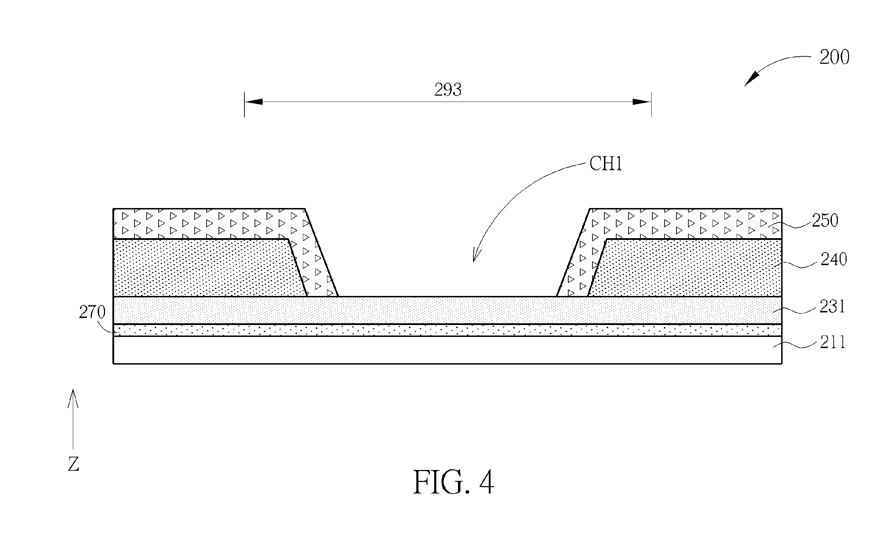

As shown in FIG. 2 to FIG. 4, a touch panel 200 according to a first preferred embodiment of the presenting invention is provided. The touch panel 200 has a light transmitting region 291 and a peripheral region 292. The peripheral region 292 is disposed on at least a side of the light transmitting region 291. According to the present embodiment, the peripheral region 292 surrounds the entire periphery of the light transmitting region 291, but is not limited thereto. In another case, the peripheral region 292 may be only disposed adjacent to a portion of the periphery of the light transmitting region 291. The touch panel 200 includes a first substrate 211, a plurality of first conductive series 221 and a plurality of first outer traces 231. The first conductive series 221 and the first outer traces 231 are disposed on the first substrate 211. The first conductive series 221 is at least disposed in the light transmitting region 291 and extends along a first direction X. The first outer traces 231 are disposed in the peripheral region 292. In other words, the first conductive series 221 may be completely disposed in the light transmitting region 291 or may extend to the peripheral region 292, if required, but is not limited thereto. The two ends of each of the first outer traces 231 are respectively connected to the corresponding two ends of each first conductive series 221. The first outer trace 231, which is connecting to the two ends of each of the first conductive series 221, may further extend to a connection region 293 which is a bonding area in the peripheral region 292. Each first outer trace 231 and its corresponding first conductive series 221 may form a closed conductive path on the first substrate 211. In other words, starting from any point in the first outer trace 231 and proceeding along the first outer trace 231 and the corresponding first conductive series 221, the final point will overlap the initial point in the first outer trace 231 subsequently. A structure with this design may be called "closed conductive path". In addition, this closed conductive path is only formed by the first outer traces 231 and the corresponding first conductive series 221 on the surface of the first substrate 211 without other outer devices such as flexible printed circuit (FPC). According to the present embodiment, the touch panel 200 may further include an isolation layer 240 and a protection layer 250 sequentially stacked on the first substrate 211. The composition of the isolation layer 240 and the protection layer 250 may respectively include inorganic materials, such as silicon nitride, silicon oxide and silicon oxynitride, organic materials, such acrylic resin, or other suitable materials. The protection layer 250 is disposed on the first outer traces 231 and includes at least a contact hole CH1. The contact hole CH1 partially exposes the corresponding first outer trace 231. According to the present embodiment, the peripheral region 292 includes a connection region 293 and the contact hole CH1 is disposed in the connection region 293 so as to at least partially expose the first outer traces 231 located in the connection region 293. In other words, each outer trace 231 is exposed from the protection layer 250 through the contact hole CH1 in the connection region 293. In this configuration, an outer device, such as a flexible printed circuit board (not shown in FIG. 2 to FIG. 4), may be bonded to each first outer trace 231 in the connection region 293 through a bonding process. Consequently, the first conductive series 221 may be controlled by the outer device through each first outer trace 231. Since each first outer trace 231 and each corresponding first conductive series 221 form a closed conductive path on the first substrate 211 according to the present embodiment, the touch panel 200 may only require one connection region 293 in order to be connected to an outer device (also called single pin design) thereby simplifying the bonding process. In addition, since each first outer trace 231 is connected to the two ends of the corresponding first conductive series 221 along a first direction X, the design of the first outer traces 231 may be regarded as a double routing design, which may solve the problem caused by the first conductive series 221 having a relatively high resistance.

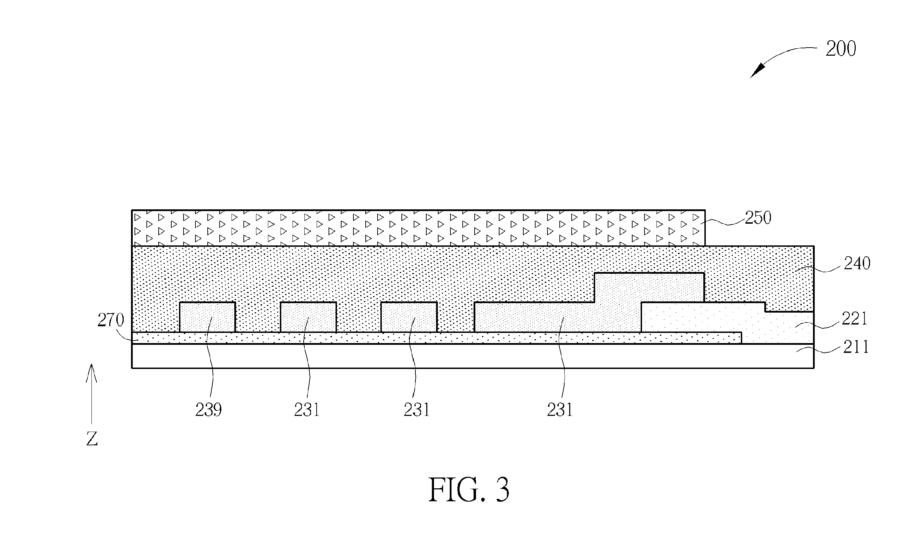

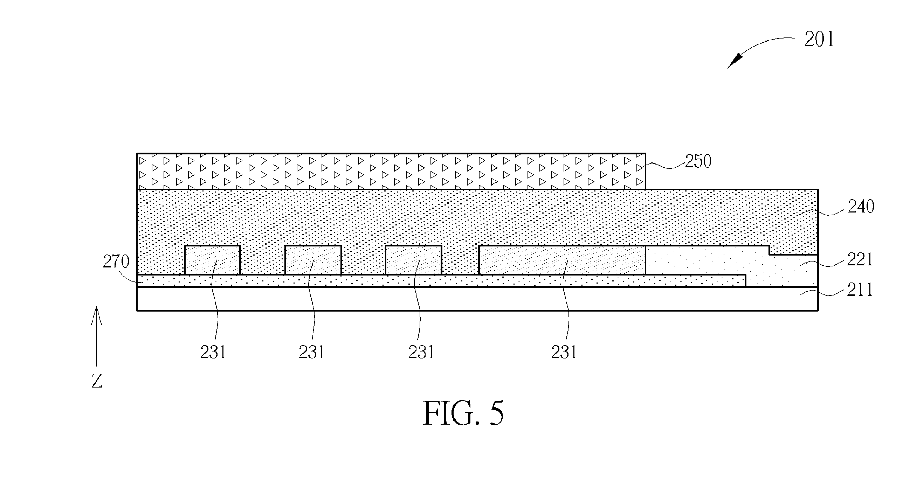

Precisely, the above mentioned first substrate 211 may be a substrate constituted by a soft material or a rigid material, such as a glass substrate, a strengthened glass substrate, a plastic substrate, a flexible cover lens, a flexible plastic substrate, for example, a plastic film, a thin glass substrate (as glass film) or a substrate of the display. Herein, the above-mentioned strengthened glass substrate may be a cover lens and a decoration layer 270 is disposed on at least one side of the cover lens, for example, disposed in a portion of the peripheral region or disposed to cover the entire peripheral region. The above-mentioned substrate of the display may include a color filter substrate of a liquid crystal display or a package substrate of an organic light-emitting display. In addition, the touch panel 200 may further include a grounding line 239 disposed on the first substrate 211 to surround each first outer trace 231 and each first conductive series 221. The grounding line 239 is partially disposed in the connection region 293 so as to be electrically connected to the above-mentioned outer device. As shown in FIG. 3, the first outer trace 231 may partially overlap the corresponding first conductive series 221 along a vertical projection direction Z perpendicular to the first substrate 211 so as to achieve the required physical contact and electrical connection, but is not limited thereto. As shown in FIG. 5, in a touch panel 201 according to another preferred embodiment of the present invention, the first outer trace 231 and its corresponding first conductive series 221 may be formed integrally so as to achieve the required connections. In other words, the first outer traces 231 and the first conductive series 221 can be formed concurrently on the first substrate 211 through patterning a conductive layer. In this way, the corresponding manufacturing process can be further simplified. The composition of the first outer traces 231 and the first conductive series 221 may be the same, but is not limited thereto. In addition, a decoration layer 270 may be further disposed on at least one side of the peripheral region 292, if required, to decorate the periphery of the touch panel 200, but is not limited thereto. Precisely, the decoration layer may be a single-layered or a multi-layered structure composed of suitable decoration materials, such as color inks, color photoresists or other color materials.

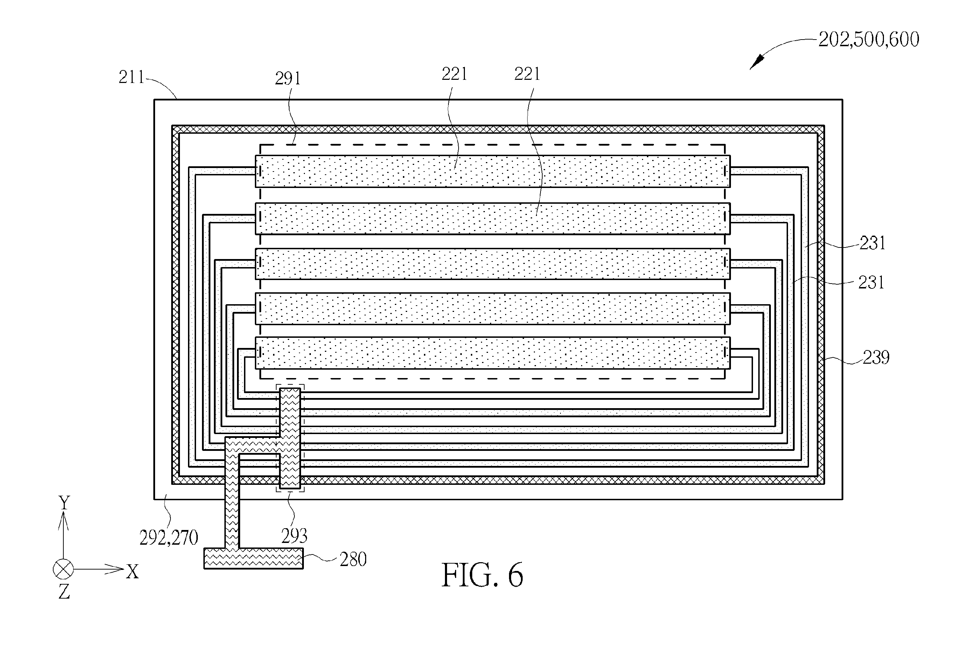

As shown in FIG. 6, according to another preferred embodiment of the present invention, a touch panel 202 may further include an outer device 280 disposed in the peripheral region 292 and at least partially disposed in the connection region 293. The outer device 280 is electrically connected to the first outer traces 231 in the connection region 293 so as to control each first conductive series 221. The outer device 280 may include a flexible printed circuit board (FPC), driver integrated circuit (driver IC) or other suitable outer device. According to the present embodiment, each first outer trace 231, the corresponding first conductive series 221 and the outer device 280 located in the connection region 293 may form a closed conductive path on the first substrate 211. In other words, each first conductive series 221 and the corresponding first outer trace 231 may form a closed conductive path on the first substrate 211. Additionally, the outer device 280 is electrically connected to this closed conductive path.

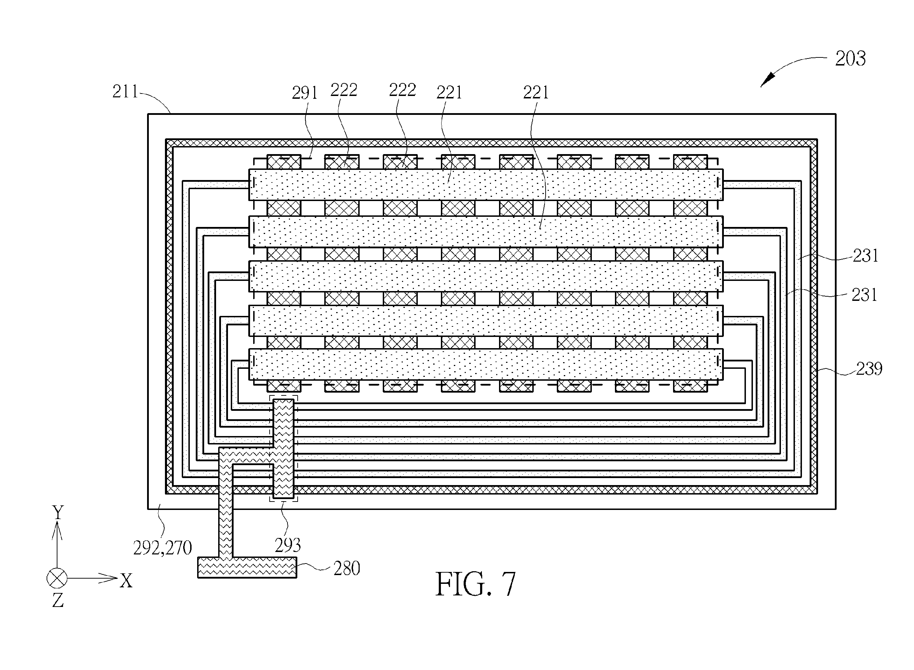

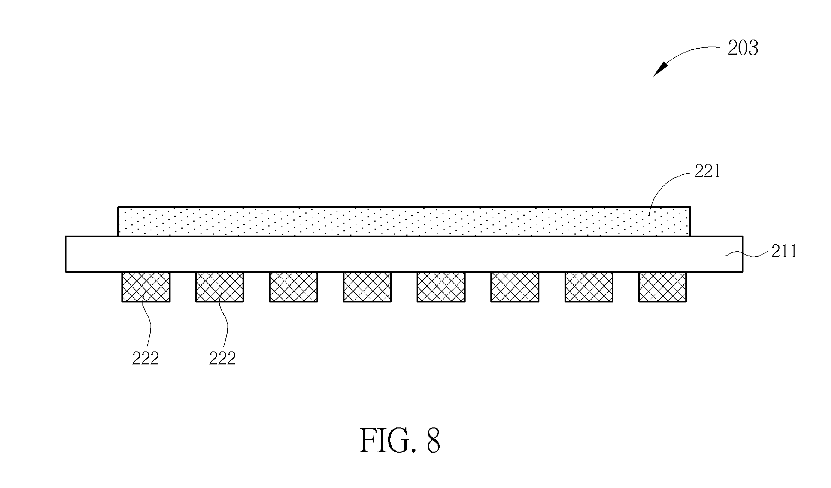

As shown in FIG. 7 and FIG. 8, a touch panel 203 according to another preferred embodiment of the present invention may further include a plurality of second conductive series 222. The second conductive series 222 are at least disposed in the light transmitting region 291 and extend along a second direction Y. In other words, the second conductive series 222 may be completely disposed in the light transmitting region 291 or may partially extend to the peripheral region 292 if required, but is not limited thereto. The first direction X may intersect the second direction Y. Preferably, the first direction X is perpendicular to the second direction Y, but is not limited thereto. According to the present embodiment, each first conductive series 221 and each second conductive series 222 are respectively disposed on the different surfaces of the first substrate 211, but is not limited thereto. It is worth noting that each first conductive series 221 and each second conductive series 222 may be respectively a touch signal transmitting electrode and a touch signal receiving electrode so as to respectively transmit and receive the touch sensing signals. In other words, the touch panel 203 may be a mutual capacitive touch panel, but is not limited thereto.

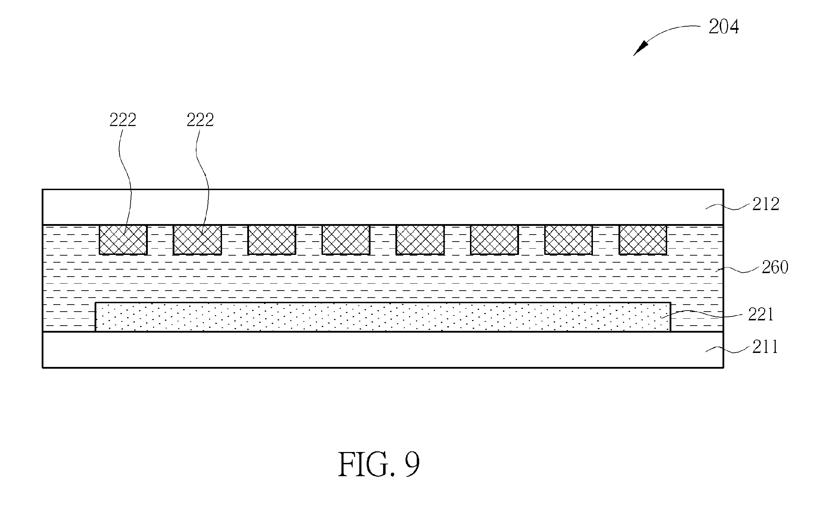

As shown in FIG. 9, a touch panel 204 is provided according to another preferred embodiment of the present invention. The touch panel 204 may further include a second substrate 212 and an adhesive layer 260. The second substrate 212 is opposite to the first substrate 211 and the second conductive series 222 is disposed on the second substrate 212. The adhesive layer 260 is disposed between the first substrate 211 and the second substrate 212 so the first substrate 211 can adhere to the second substrate 212. The second conductive series 222 disclosed in the present embodiment are disposed on the surface of the second substrate 212 facing the first substrate 211, but is not limited thereto. According to other preferred embodiments of the present invention, the second conductive series 222 are disposed on the surface of the second substrate 212 opposite to the first substrate 211.

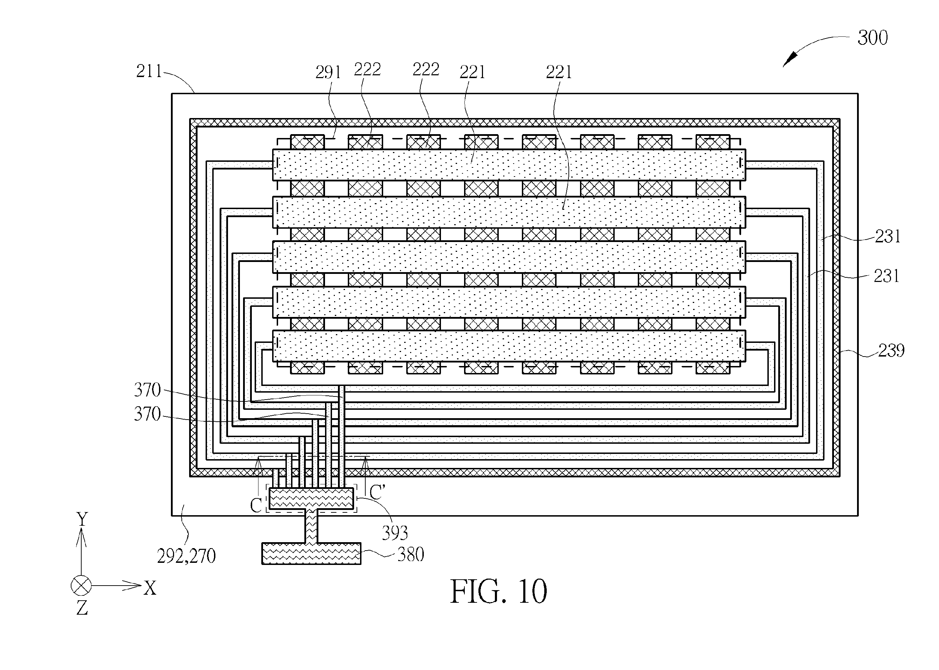

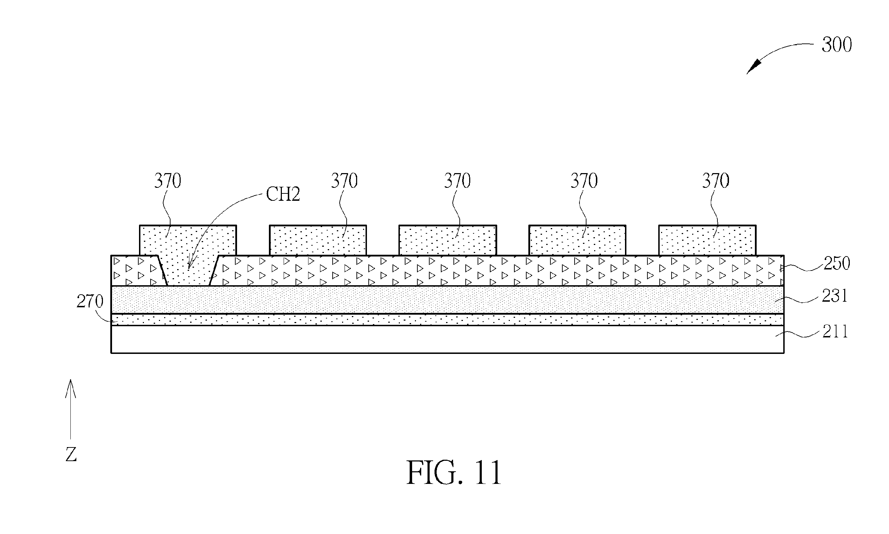

As shown in FIG. 10 and FIG. 11, a touch panel 300 is disclosed according to a second preferred embodiment of the present invention. The difference between the present embodiment and the previous embodiment is that the touch panel 300 further includes a plurality of connection lines 370 and an outer device. The connection lines 370 are disposed on the protection layer 250. The protection layer 250 includes at least a contact hole CH2 used to partially expose the corresponding first outer traces 231. One end of each connection line 370 electrically is connected to the corresponding first outer trace 231 through the contact hole CH2, and the other end of each connection line 370 extends to the periphery of the touch panel 300. That is to say, the other end of each connection line 370 that is opposite to the end connected to the first outer trace 231 may extend to a connection region 393 in the peripheral region 292. The outer device 380 is at least partially disposed on the connection line 370 and is electrically connected to the first outer traces 231 through the connection lines 370. In this configuration, the outer device 380 can control the first conductive series 221 in the light transmitting region 291 by using the connection lines 370 and the first outer traces 231. Since the first outer traces 231 disclosed in the present embodiment are not disposed in the connection region 393, if the process for bonding the outer device 380 has failed and a rework process is required to be carried out, the first outer trace 231 will not be harmed by this rework process and the yield can be improved accordingly. Apart from the connection line 370, the rest of the parts of the touch panel 300 disclosed in this embodiment, such as the positions of other parts and the material properties are almost similar to those described in the previous first preferred embodiment. For the sake of brevity, these similar configurations and properties are therefore not disclosed in detail.

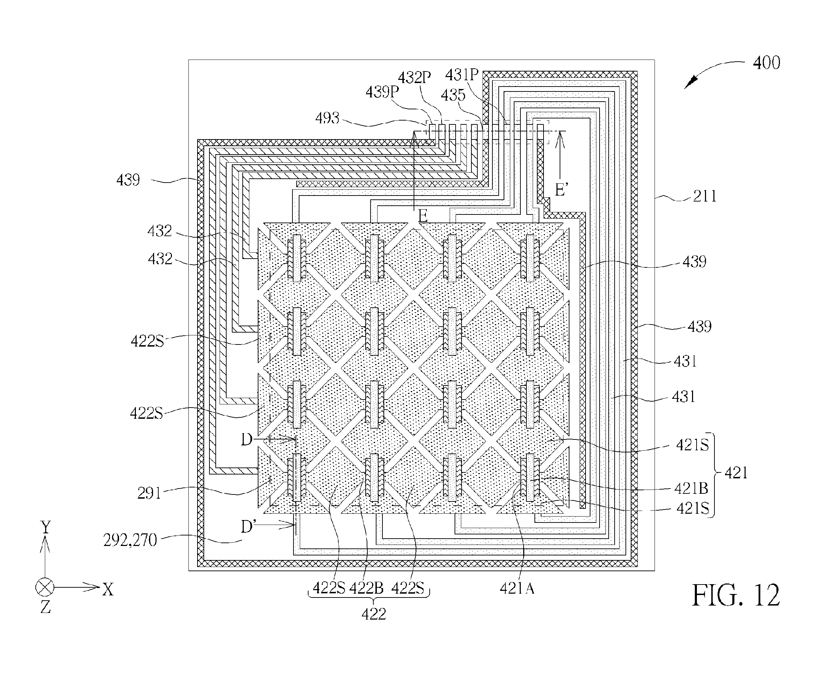

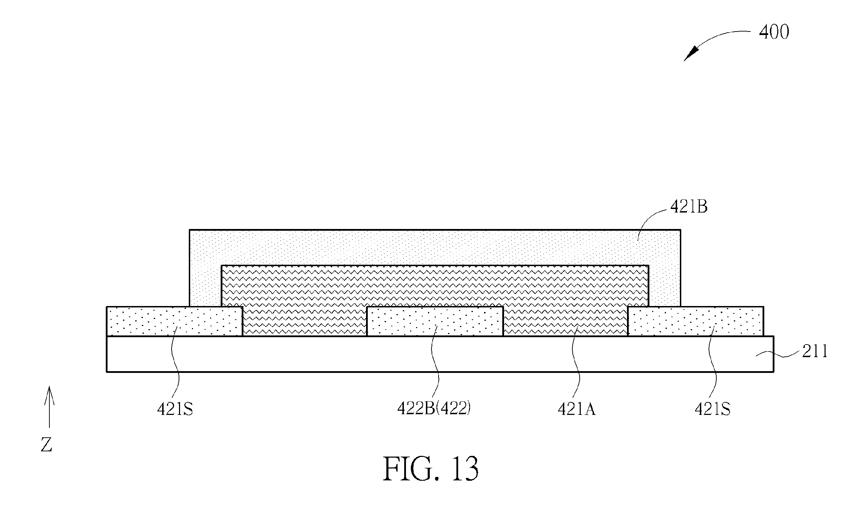

As shown in FIG. 12 to FIG. 14, a touch panel 400 is provided according to a third preferred embodiment of the present invention. The touch panel 400 has a light transmitting region 291 and a peripheral region 292 located on at least a side of the light transmitting region 291. The peripheral region 292 according to the present embodiment surrounds the entire periphery of the light transmitting region 291, but is not limited thereto. The touch panel 400 includes a first substrate 211, a plurality of first conductive series 421, a plurality of second conductive series 422 and a plurality of first outer traces 431. The first conductive series 421, the second conductive series 422 and the first outer traces 431 are disposed on the same surface of the first substrate 211. The first conductive series 421 are at least disposed in the light transmitting region 291 and extend along a first direction X. The second conductive series 422 are at least disposed in the light transmitting region 291 and extend along a second direction Y. The first conductive series 421 and the second conductive series 422 may further extend to the peripheral region 292. The first outer traces 431 are disposed in the peripheral region 292. The two ends of each of the first outer traces 431 are respectively connected to the corresponding two ends of each first conductive series 421. Each first outer trace 431 and the corresponding first conductive series 421 may form a closed conductive path on the first substrate 211. Each first conductive series 421 disclosed in the present embodiment includes a plurality of first electrodes 421S and at least a first connection line 421B. The first connection line 42 1 B is used to electrically connect two adjacent first electrodes 421S. Each second conductive series 422 includes a plurality of second electrodes 422S and at least a second connection line 422B. The second connection line 422B is used to electrically connect two adjacent second electrodes 422S. The touch panel 400 may further include at least an patterned insulating layer 421A disposed between the first connection line 421B and the corresponding second connection line 422B so as to electrically isolate the first conductive series 421 and the second conductive series 422. At least one of the first connection line 421B and the second connection line 422B includes a metal line. In another embodiment of the present invention, the insulating layer 421A may be a whole layer, and the first conductive series 421 and the second conductive series 422 may be disposed on different surfaces of the insulating layer 421A.

According to the present embodiment, the touch panel 400 may further include at least a protection layer 250 disposed on the first outer traces 431. The protection layer 250 may completely cover the first substrate 211, a plurality of first conductive series 421, a plurality of second conductive series 422 and a plurality of first outer traces 431. The position, the number of layers and the material of the protection layer 250 are not limited thereto. The protection layer 250 includes a plurality of contact holes CH3, which may partially expose the corresponding first outer traces 431. In addition, the peripheral region 292 includes a connection region 493. Each first outer trace 431 includes a contact pad 431P disposed in the connection region 493. The contact holes CH3 may expose the contact pads 431P. To put it more concretely, the touch panel 400 may further include a plurality of second outer traces 432 and at least a grounding line 439 disposed in the peripheral region 292. One end of each second outer trace 432 is electrically connected to one end of the corresponding second conductive series 422, and another end of each second outer trace 432 opposite to the end connected to the second conductive series 422 extends to the connection region 493. Each second outer trace 432 includes a contact pad 432P disposed in the connection region 493. At least a portion of the contact holes CH3 partially expose the contact pads 432P. The grounding line 439 is disposed in the peripheral region 292, which may extend to the connection region 493 within the peripheral region 292 and comprises at least an interrupted section 435 within the connection region 493. Preferably, the interrupted section 435 has a length less than or equal to 5 millimeters (mm), but is not limited thereto. The grounding line 439 is disposed on the first substrate 211 and surrounds each first outer trace 431, each second outer trace 432, each first conductive series 421 and each second conductive series 422. The grounding line 439 includes a contact pad 439P disposed in the connection region 493. The contact holes CH3 partially expose the contact pads 439P.

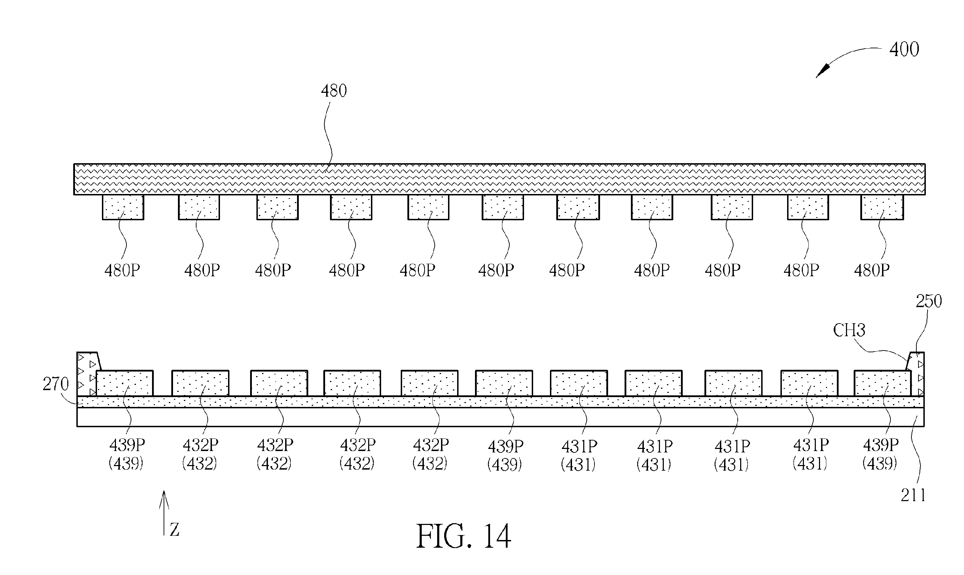

As shown in FIG. 12 and FIG. 14, the touch panel 400 may further include an outer device 480. The outer device 480 includes a plurality of bonding pads 480P which can be disposed correspondingly to the contact pads 431P, the contact pads 432P or the contact pad 439P. The outer device 480 may be electrically connected to the contact pads 431P, the contact pads 432P and the contact pads 439P in the connection region 493 through a conductive adhesive material, such as an anisotropic conductive film (ACF). In other words, the outer device 480 is electrically connected to the first outer traces 431, the second outer traces 432, and the grounding line 439 through the contact holes CH3. Therefore, the first conductive series 421 and the second conductive series 422 in the light transmitting region 491 can be controlled by the outer device 480. Besides, the outer device 480 may be electrically connected to two ends of the interrupted section 435 of the grounding line 439 so as to constitute a closed conductive path. Apart from the structure of the first conductive series 421 and the position of each second conductive series 422, the rest of the parts of the touch panel 400 disclosed in this embodiment, such as the positions of other parts and the material properties are almost similar to those described in the previous first preferred embodiment. For the sake of brevity, these similar configurations and properties are therefore not disclosed in detail. Furthermore, a protection layer 270 may be further provided and disposed on at least one side of the peripheral region 292. In this way, the periphery of the touch panel 400 may be decorated, but is not limited thereto.

Additionally, the composition of the first outer traces 431, the second outer traces432, the first connection line 421B, the second connection line 422B, the first electrodes 421S and the second electrodes 422S according to the present embodiment may include indium tin oxide (ITO), indium zinc oxide (IZO) and aluminum zinc oxide (AZO), metal materials, or other suitable conductive materials. The metal materials mentioned above may include silver (Ag), aluminum (Al), copper (Cu), magnesium (Mg), molybdenum (Mo), titanium (Ti), chromium (Cr), a composite thereof, a stack structure thereof (such as ITO/Ag/ITO or Mo/Al/Mo) or an alloy thereof, but is not limited thereto. The structure of the materials mentioned above may be a mesh, such as a metal mesh. The conductive materials mentioned above may include conductive particles, carbon nanotubes (CNTs) or nano silver, but is not limited thereto. The structure of the conductive materials may also be a mesh, such as a conductive mesh.

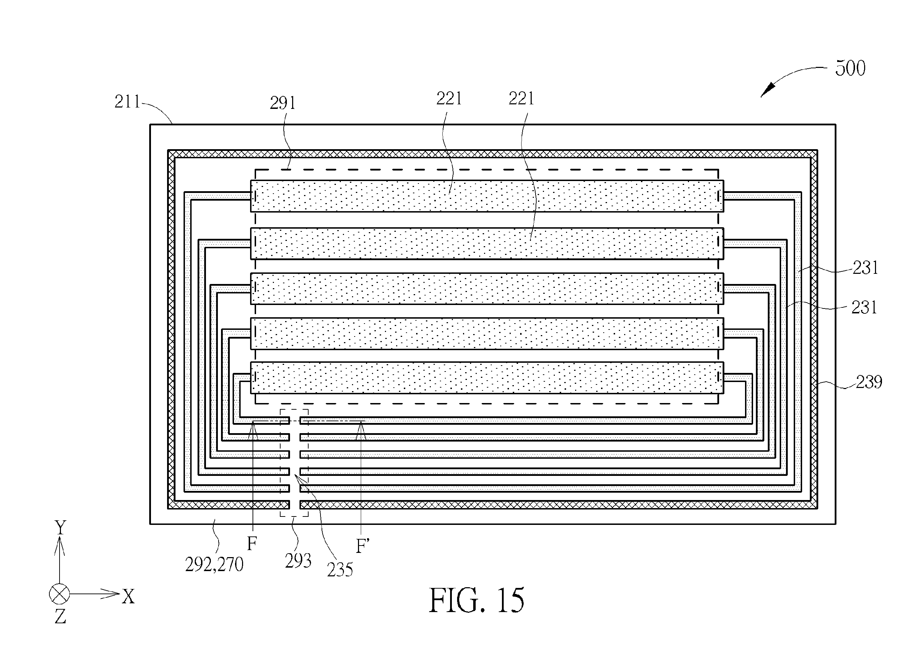

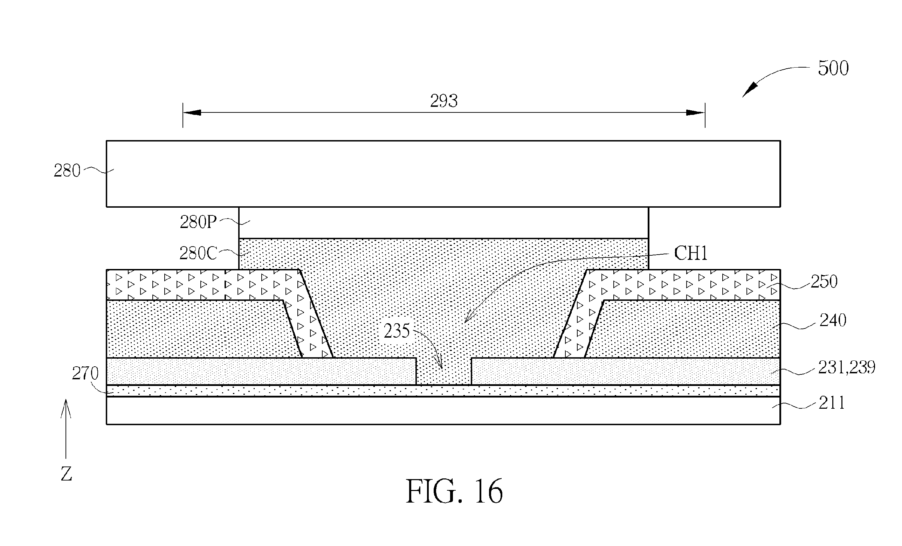

As shown in FIG. 6, FIG. 15 and FIG.16, a touch panel 500 is disclosed according to a fourth preferred embodiment of the present invention. The difference between the present embodiment and the previous first embodiment is that each of the first outer traces 231 and the grounding line 239 of the touch panel 500 respectively include interrupted sections 235 disposed in the connection region 293. A contact hole CH1 in the protection layer 250 can partially expose the corresponding first outer traces 231, and the interrupted section 235 of each first outer trace 231 is disposed correspondingly to the contact hole CH1. In other words, two sides of the interrupted section 235 of each first outer trace 231 are exposed by the contact hole CH1, and the outer device 280 includes a plurality of bonding pads 280P which can be electrically connected to the exposed first outer traces 231 with the interrupted section 235 and the exposed first conductive series 221 with the interrupted section 235 in the connection region 293. The bonding pads 280P of the outer device 280 are electrically connected to two ends of each of the interrupted sections 235 in the connection region 293 through a conductive material 280C, such as an anisotropic conductive film (ACF) so as to form the closed conductive path. Accordingly, each first outer trace 231, each corresponding first conductive series 221 and the outer device 280 can form a closed conductive path on the first substrate 211. That is to say, the first outer traces 231 respectively connected to the two ends of each of the first conductive series 221 include interrupted sections 235 in the connection region 293. The outer device 280 is electrically connected to two ends of the interrupted sections 235 of each first outer trace 231 and the grounding line 239 in the connection region 293 so as to form a closed conductive path. Besides, the outer device may be a flexible printed circuit (FPC). By using the interrupted section 235, the touch panel 500 disclosed in the present embodiment can keep the advantage of the single pin design and the control over the signals can be improved. Apart from the interrupted section 235, the rest of the parts of the touch panel 500 disclosed in this embodiment, such as the positions of other parts and the material properties are almost similar to those described in the previous first preferred embodiment. For the sake of brevity, these similar configurations and properties are therefore not disclosed in detail. It is worth noting that the length of each interrupted section 235 is less than or equal to 5 millimeters (mm), and it preferably ranges from 0.01 mm to 0.5 mm. This configuration can provide a single pin design without increasing the size of the outer device 280. In addition, the outer traces and the grounding line of the touch panel disclosed in each of the previous embodiments may be optionally disposed with the interrupted sections 235 disclosed in the present embodiment. In this way, the control over the signals may be improved.

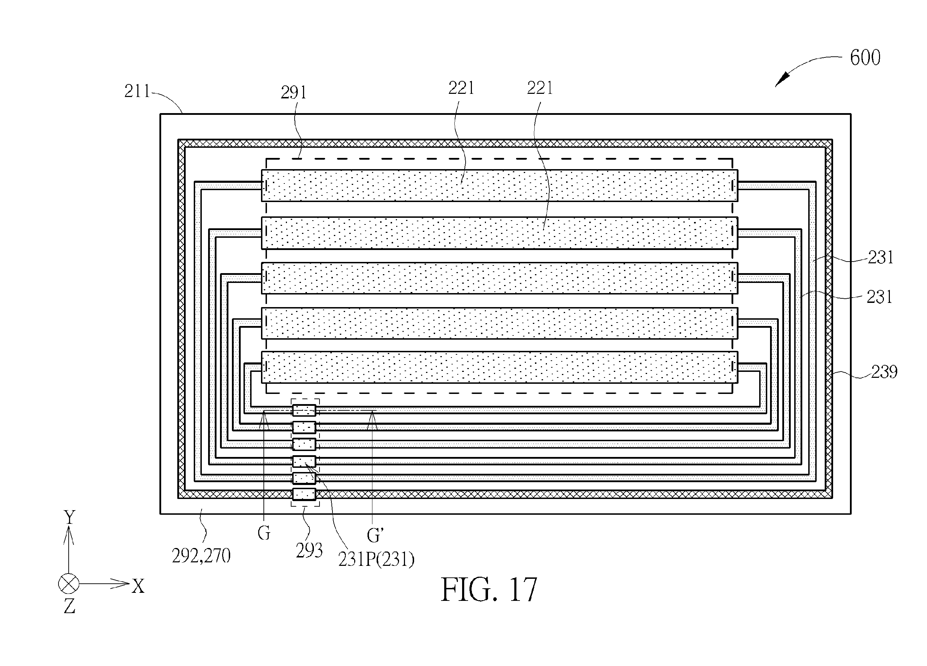

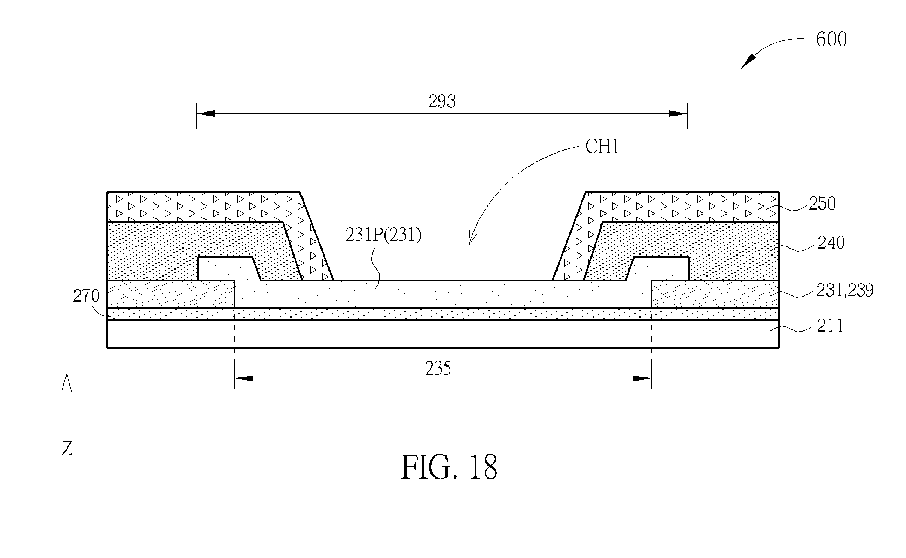

As shown in FIG. 6, FIG. 17 and FIG. 18, a touch panel 600 is provided according to a fifth preferred embodiment of the present invention. The difference between the present embodiment and the previous fourth embodiment is that each of the first outer traces 231 and the grounding line 239 of the touch panel 600 may respectively include a contact pad 231P disposed in the connection region 293. Each contact pad 231P is electrically connected to two ends of the interrupted section 235 of each first outer trace 231 and the grounding line 239 so as to have each first outer trace 231 and the corresponding first conductive series 221 form a closed conductive path on the first substrate 211 and to have the grounding line 239 form a closed conductive path on the first substrate 211. Besides, the process sequence of the contact pads 231P, the outer traces 231 and the grounding line 239 are not limited. The contact hole CH1 of the protection layer 250 may partially expose the corresponding contact pad 231P. In this way, the outer device 280 may be electrically connected to the exposed contact pads 231P in the connection region 293 and may be electrically connected to the first outer traces 231 and the first conductive series 221 through contact pads 231P. Apart from the contact pads 231P, the rest of the parts of the touch panel 600 disclosed in this embodiment, such as the positions of other parts and the material properties are almost similar to those described in the previous first preferred embodiment. For the sake of brevity, these similar configurations and properties are therefore not disclosed in detail. It is worth noting that the composition of the contact pads 231P may be transparent conductive material or metal conductive material so as to have each first outer trace 231 and the corresponding first conductive series 221 form the closed conductive path on the first substrate 211. The outer device 280 may further be electrically connected to each contact pad 231P, but is not limited thereto. That is to say, the closed conductive path, formed by each first outer trace 231 and the corresponding first conductive series 221, can be of any shape so as to simplify the bonding process and the manufacturing costs. In addition, the interrupted sections 235 and the contact pads 231P may be disposed in the touch panel disclosed in each of the previous embodiments so as to improve the control over the signals.

In the touch panel with the double routing design according to the present invention, each outer trace and each corresponding electrode can form a closed conductive path so that a single pin design can be adopted in the touch panel with a double routing design, thus further simplifying the complexity of the corresponding bonding process and lowering the manufacturing costs.

## Claims

1. A touch panel (200, 201, 202, 203, 204, 300, 400, 500, 600), having a peripheral region (292), the touch panel (200, 201, 202, 203, 204, 300, 400, 500, 600) **characterized by**:
a substrate (211);
a plurality of conductive series (221, 421), disposed on the substrate (211) and extending along a first direction (X);
a plurality of outer traces (231, 431), disposed in the peripheral region (292), wherein two ends of each of the outer traces (231, 431, 432) are respectively connected to two ends of the cconductive series (221, 421), and the outer traces (231, 431, 432) extend to a connection region (293, 393, 493) disposed within the peripheral region (292); and
an outer device (280, 380, 480), disposed in the peripheral region (292), wherein the outer device (280, 380, 480) is electrically connected to the outer traces (231, 431), and each of the outer traces (231, 431, 432), each of the conductive series (221, 421) and the outer device (280, 380, 480) located in the connection region (293, 393, 493) constitute a closed conductive path.

2. The touch panel (500, 600) of claim 1, **characterized in that** each of the outer traces (231) has a interrupted section (235) in the connection region (293), and the outer device (280) has a plurality of bonding pads (280P), each of the bonding pads (280P) is electrically connected to corresponding two ends of each of the interrupted sections (235) in the connection region (293) so as to form the closed conductive path.

3. The touch panel (202, 203, 204, 300, 400, 500, 600) of claim 1, **characterized in that** each of the conductive series (221, 421) and each of the outer traces (231, 431) form the closed conductive path, and the outer device (280, 380, 480) is electrically connected to the closed conductive path.

4. The touch panel (200, 201, 202, 203, 204, 300, 400, 500, 600) of claim 1, further **characterized by** a protection layer (250) at least disposed on the outer traces (231, 431), wherein the protection layer (250) comprises at least a contact hole (CH1, CH3), and the contact hole (CH1, CH3) partially exposes the outer traces (231, 431, 432) in the connection region (293, 493), and the outer device (280, 480) is electrically connected to the outer traces (231, 431) via the contact hole (CH1, CH3).

5. The touch panel (400, 600) of claim 4, **characterized in that** each of the outer traces (231, 431) comprises a contact pad (231P, 431P) disposed in the connection region (293, 493), and the contact hole (CH1, CH3) at least partially exposes the contact pad (231P, 431P).

6. The touch panel (300) of claim 3, further **characterized by** a protection layer (250) and a plurality of connection lines (370), wherein the protection layer (250) is at least disposed on the outer traces (231) and comprises at least a contact hole (CH2) partially exposing a corresponding outer trace (231), and the connection lines (370) are disposed on the protection layer (250), wherein one end of each of the connection lines (370) is electrically connected to the outer trace (231) via the contact hole (CH2), and the other end of each of the connection lines (370) extends to a peripheral of the touch panel (300), and at least a portion of the outer device (380) is disposed on the connection lines (370), wherein the outer device (380) is electrically connected to the outer traces (231) via the connection lines (370).

7. The touch panel (203, 204, 300, 400) of claim 1, further **characterized by** a plurality of second conductive series (222, 422) and a light transmitting region (291, 491), wherein the peripheral region (292) is located on at least a side of the light transmitting region (291, 491), and the second conductive series (222, 422) are at least disposed in the light transmitting region (291, 491) and extend along a second direction (Y).

8. The touch panel (204) of claim 7, further **characterized by** a second substrate (212) opposite to the substrate (211), wherein the second conductive series (222) are disposed on the second substrate (212).

9. The touch panel (203) of claim 7, **characterized in that** each of the conductive series (221) and each of the second conductive series (222) are respectively disposed on different surfaces of the substrate (211).

10. The touch panel (400) of claim 7, further **characterized by** a patterned insulating layer (421A), wherein the conductive series (421) and the second conductive series (422) are disposed on a same surface of the substrate (211); each of the conductive series (421) comprises a plurality of first electrodes and at least a first connection line, the first connection line (421B) is used to electrically connect two adjacent first electrodes (421S), each of the second conductive series (422) comprises a plurality of second electrodes (422S) and at least a second connection line (422B), the second connection line (422B) is used to electrically connect two adjacent second electrodes (422S), and the patterned insulating layer (421A) at least disposed between the first connection line (421B) and a corresponding second connection line (422B) so as to electrically isolate the conductive series (421) and the second conductive series (422).

11. The touch panel (400) of claim 10, **characterized in that** at least one of the first connection lines (421B) and the second connection lines (422B) comprises a metal line.

12. The touch panel (500, 600) of claim 2, **characterized in that** each of the interrupted sections (235) has a length less than or equal to 5 millimeters (mm).

13. The touch panel (600) of claim 2, wherein each of the outer traces (231) comprises a contact pad (231P) disposed in the connection region (293), each of the contact pads (231P) is respectively connected to two ends of the interrupted section (235) of each of the outer traces (231) so as to have each of the outer traces (231) and the first conductive series (221) form the closed conductive path, and the outer device (231) is electrically connected to each of the contact pads (231P).

14. The touch panel (200, 201, 202, 203, 300, 400, 500, 600) of claim 1, further **characterized by** a decoration layer (270), disposed on at least one side of the peripheral region (292), wherein the decoration layer (270) is disposed on the first substrate (211) and located in part of the peripheral region (292).

15. The touch panel (200, 201, 202, 203, 204, 300, 400, 500, 600) of claim 1, **characterized in that** the outer device (280, 480) is a flexible printed circuit (FPC) having a plurality of bonding pads (280P, 480P) corresponding to the connection region (293, 493).
